# EUROPEAN PATENT SPECIFICATION

(11) **EP 2 110 350 B1**
(45) Date of publication and mention of the grant of the patent: **26.10.2011**
(21) Application number: 09157831.0
(22) Date of filing: 14.04.2009
(51) Int. Cl.: B65G 59/02, B65H 3/32, B27B 31/00

(54) **Apparatus for forming stacks of panels**
Vorrichtung zum Bilden von Plattenstapeln
Appareil pour former des piles de panneaux

(30) Priority: 16.04.2008 IT BO20080232
(43) Date of publication of application: 21.10.2009
(73) Proprietor: GIBEN INTERNATIONAL S.p.A., 40065 Pianoro (Bologna) (IT)
(72) Inventor: Benuzzi, Piergiorgio, 40141 Bologna (IT)
(74) Representative: Lanzoni, Luciano

(56) References cited:
- EP-A- 0 731 045
- EP-A- 1 505 017
- EP-A- 1 784 270
- US-A- 5 102 293

## Description

This invention addresses an apparatus for forming stacks of panels and, in particular, an apparatus for forming stacks of panels whose thickness is relatively small compared to the surface area such as, for example, veneering or sheets of wood or like material, including composites, starting from a pile of the panels to be fed to a panel saw machine.

Current panel sawing processes by which large panels are cut into smaller sub-panels used, for example, in the furniture industry, involve the use of apparatus which, starting from a vertical pile of panels or sheets positioned on an elevator table, select a certain number of panels from the top of the pile, grip the selected panels to form a stack, and transfer the stacks thus formed at regular intervals to a sawing station.

In a prior art apparatus of this kind, panel selection is achieved by the combined operation of a stop element that references the top of the pile and a panel selection element.

The top reference stop and panel selection elements are mounted on a carriage and move to and fro on the carriage between a position in which they are clear of the pile and a position in which they engage the pile to form the stack.

The selection element operates in a development plane below the reference stop at the top of the pile at a distance corresponding to the height of the required stack of panels.

A side wall abuts against one side of the pile at the face opposite the face of it nearest the selection element. Opposing the reaction exerted by the side wall and in some cases also acting in conjunction with the simultaneous lowering of the elevator table, the selection element is actuated in such a way as to create a gap in the pile of panels separating a certain number of stacked panels en bloc from the rest of the panels in the pile below that will form the subsequent stacks.

An unstacking apparatus for removing a partial stack from a stack of sheets resting on a supporting surface is disclosed in US5012293. US 5012293 also discloses an apparatus for forming stacks of panels from a vertical pile of panels according to the preamble of claim 1.

Such apparatus comprises, a tabletop, a horizontal adjustment device for executing horizontal relative movements between the tabletop and the aforementioned supporting surface, a gripper comprising an upper gripper jaw and a gripper base for seizing and holding an edge of a partial stack, and a vertical adjustment device for executing vertical relative motions between the tabletop and the gripper, on the one hand, and the supporting surface, on the other hand.

Panel saw machines further comprise a pusher unit equipped with gripper clamps having parallel, horizontal jaws. The lower jaw of each of the clamps penetrates the gap created and kept open by the selection element and, working in conjunction with the upper jaw that acts on the panel at the top, clamps the stack of panels separated en bloc

from the rest of the pile. The crossbar is then moved horizontally with the jaws in the clamped position in such a way as to carry the stack of panels thus selected towards a sawing or cutting unit.

In many panel saw machines of this kind, the apparatus that forms the stacks is mounted on the pusher unit and moves as one with the latter as it advances towards the cutting unit.

Generally speaking, the stack forming apparatus has proved to work well and without particular problems when the panels being worked have good dimensional tolerances, good flatness and, generally good "geometrical regularity".

On the other hand, where the panels are flexible, tending to bend, and have high dimensional tolerances, it is difficult to correctly align the wedge-shaped element and the abutting surfaces between one panel and another. This leads to problems inserting the wedge in the pile of panels and, as a result, the wedge tends to damage the edges of the panels (creating splinters and chippings as much as a hundred millimetres wide) which cannot be removed even by trimming and which are therefore unacceptable.

In this context, the main technical purpose of the present invention is to propose an apparatus for forming stacks of panels, especially thin panels, that is free of the above mentioned disadvantages. One aim of this invention is to provide a stack forming apparatus which is especially suitable for thin panels and which eliminates the risk of splintering caused by insertion of the panel selection element.

Another aim of the invention is to provide a stack forming apparatus that can precisely select the panels forming the stack.

The stated technical purpose and at least the specified aims of the invention are substantially achieved by a stack forming apparatus comprising the technical characteristics described in independent claim 1 and in one or more of the claims dependent thereon.

Further features and advantages of the present invention are more apparent in the detailed description below, with reference to a preferred, non-limiting, embodiment of an apparatus for forming stacks of panels, illustrated in the accompanying drawings, in which:
- Figure 1 is a side view of an apparatus for forming stacks of panels according to the invention in a first working configuration;
- Figure 2 is a schematic side view of the apparatus of Figure 1 in a second working configuration;
- Figure 3 is a schematic top plan view of the apparatus of Figure 2;
- Figure 4 is a schematic front view of the apparatus of Figure 1;
- Figure 5 is a schematic side view of the apparatus of Figure 1 in a third working configuration;
- Figure 6 is a schematic side view, with some parts cut away for clarity, of the apparatus of Figure 1 in a fourth working configuration.

With reference to the accompanying drawings, the numeral 1 denotes an apparatus for forming stacks 2 of panels 3 from a pile 4 in order to feed them to a user station, not illustrated.

The apparatus 1 is designed in particular for panel saw machines in the panel processing industry and the user station might, for example, be a conventional sawing station in which large panels 3 are cut into smaller panels of predetermined sizes according to specific application needs.

The apparatus according to this invention is used preferably for panels, such as, veneering or sheets of wood or like material, including composites, which are relatively thin compared to their surface area.

A non-limiting example of an apparatus of this kind is described in document WO2007/113673, in the name of the same Applicant as this invention which is incorporated herein in its entirety to better understand this description which focuses on the aspects specific to this invention.

Preferably the pile 4 is positioned on a platform, not illustrated, that moves in a vertical direction Z.

The apparatus 1 comprises a customary frame 5 for mounting the components described below and has a load-bearing function for the apparatus 1 itself.

A stop element 6 that references the top of the pile 4 and an encoder, schematically represented as a block 7, associated with the stop element 6 act in conjunction with the platform to determine the height of the stack 2, thus constituting means 8 for measuring the stack 2.

The apparatus 1 comprises selecting means 9 for separating the stack 2 from the pile 4.

The selecting means 9, in conjunction with the platform, create in the pile 4 a space for receiving the gripping elements, which are not illustrated since they are outside the scope of this invention and which pick up the stack 2 and carry it to the user station downstream.

The selecting means 9 comprise a separator element 10 that moves in a longitudinal direction Y - preferably corresponding to the direction in which the stacks 2 are fed to the user station - towards and away from the pile 4 in order to separate from the latter the panels 3 forming part of the stack 2.

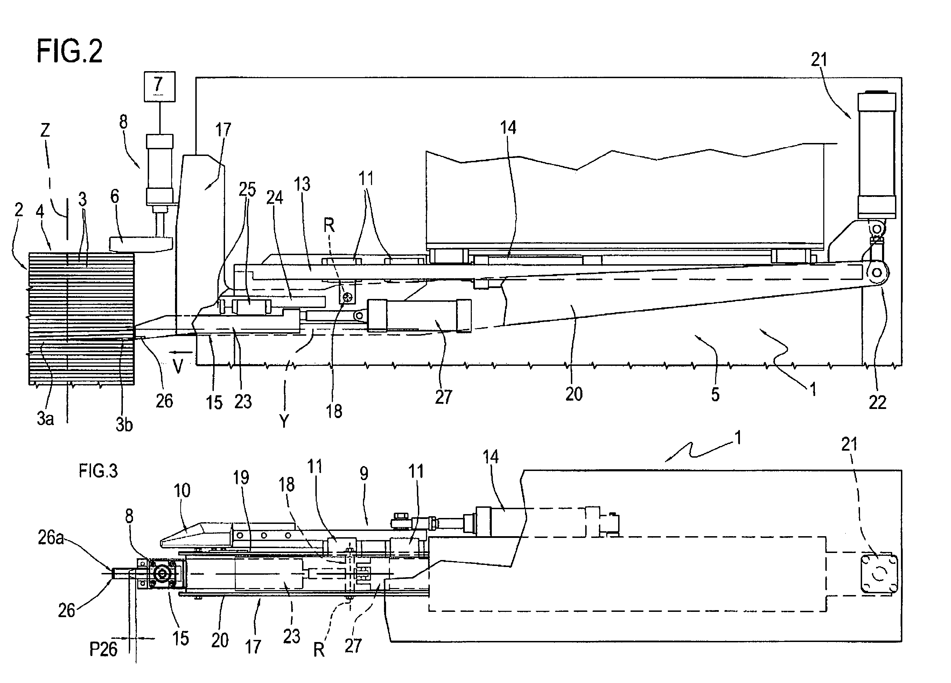

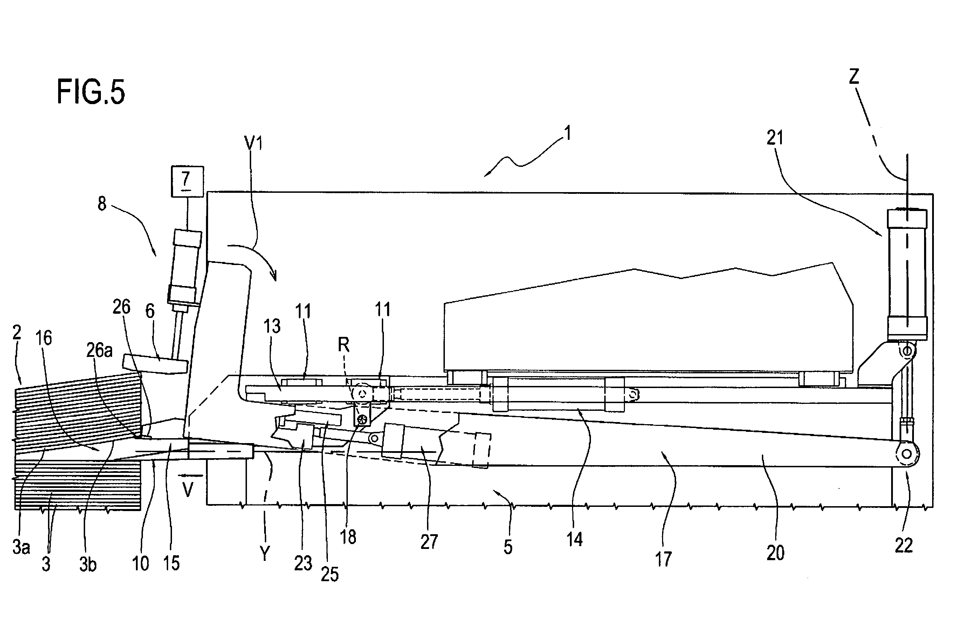

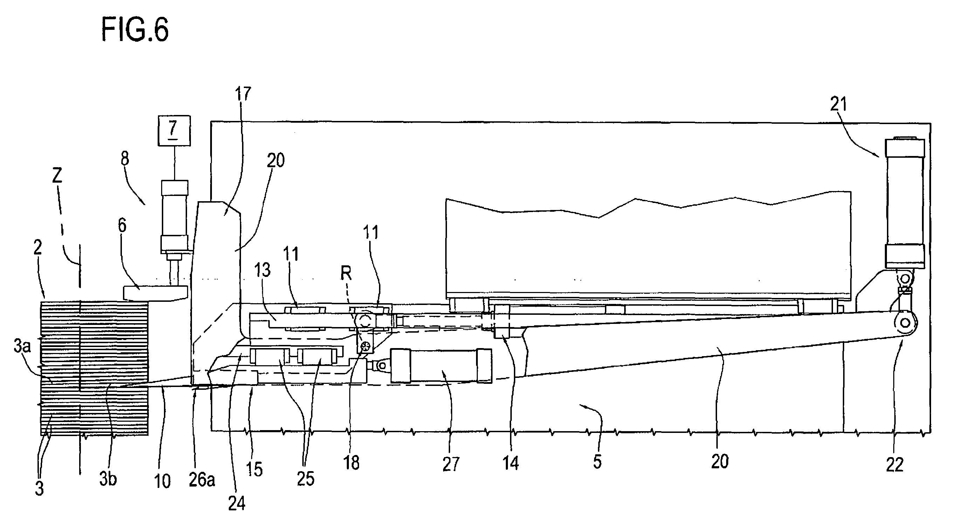

The separator element 10 can move between a home position, shown in Figure 3, and a working position, shown in Figures 5 and 6.

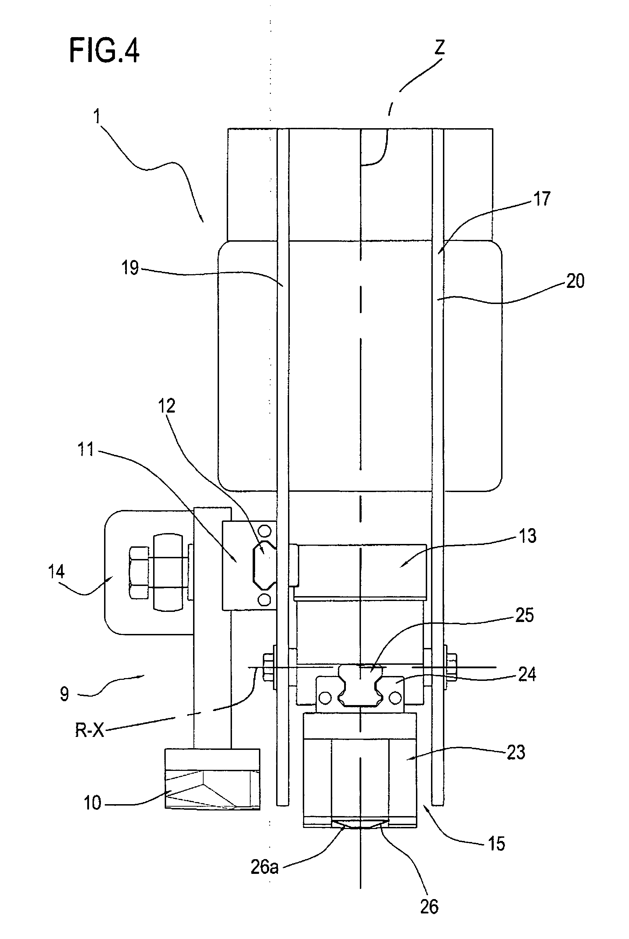

With reference in particular to Figures 3 and 4, it may be observed that the element 10 is in the form of a wedge and runs on a straight guide 12 by means of respective slide shoes 11.

The guide 12 is mounted on the frame 5 which has a structural member 13 extending along the axis Y and which the guide 12 is fixed to.

The selecting means 9 comprise a pneumatic actuator 14 associated with the separator element 10 in such a way as to move it between the aforementioned home and working positions.

The selecting means 9 comprise means 15 for retracting the pile 4 to form in the pile 4 a space 16 to receive the separator element 10.

The retraction means 15 comprise an arm 17 rotatably connected to the frame 5.

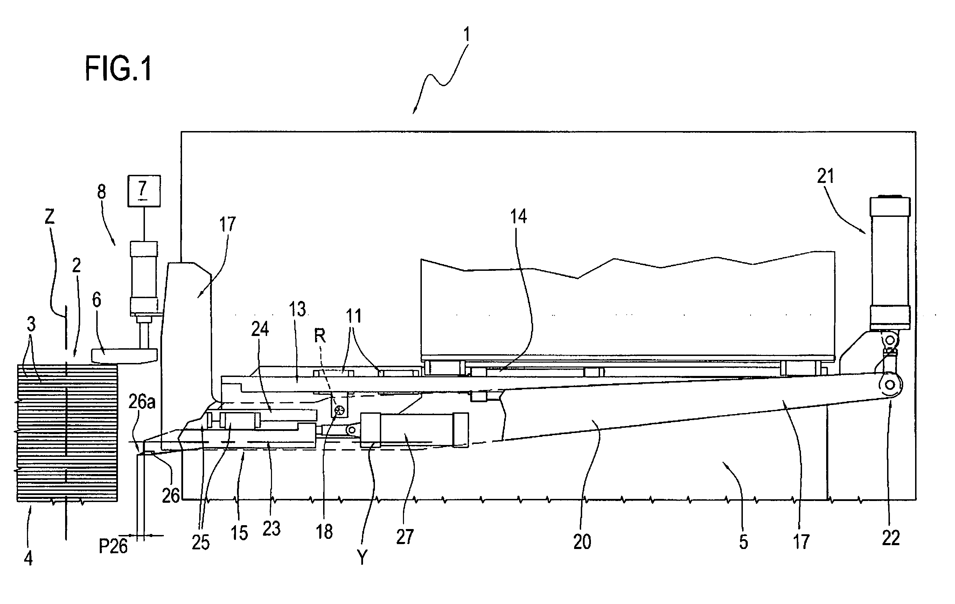

The arm 17 is rotatable about a pivot 18 with an axis of rotation R transversal to the axes Y and Z, that is to say, perpendicular to the placement plane of Figures 1, 2 and 5. By convention, the direction of R is referred to as X.

The arm 17 comprises a first and a second wall 19, 20, opposite each other, and each connected at the pivot 18.

A pneumatic actuator 21, mounted on the frame 5 operates on the arm 17 to turn it about the pivot 18.

The actuator 21, preferably operating in a substantially vertical direction, parallel to the axis Z, is connected to one end 22 of the arm 17 in order to move the arm itself between a first, substantially horizontal idle position, illustrated in Figures 1 and 2, and a rotated position, illustrated in Figure 5.

The measuring means 8 are preferably mounted on the arm 17 and move with the latter.

The retraction means 15 comprise a retraction element 23 slidably connected to the arm 17.

In particular, the element 23 is positioned between the walls 19 and 20 and is slidably constrained to a guide 24 fixed to the arm 17.

The retraction element 23 comprises a slider 25 for coupling to the guide 24 and a substantially pointed end portion.

This end portion is in the form of a claw 26 designed, as described below, to engage the pile 4 in such a way as to create the space 16.

The claw 26 has an extremely small surface compared to the separator element 10 not only in width but also in thickness: in other terms, the depth P26 of the claw 26, measured in the direction Y, is limited compared to the separator element 10 (see Figures 1, 2 and 3).

By way of non-limiting example, the claw 26 in one preferred embodiment is in the form of a small blade or plate while, in another preferred embodiment, it is in the form of a pointed tip or a wedge.

Generally speaking, the claw 26 has a tapered or wedge-shaped end 26a to be able to better penetrate the pile 4 between two superposed panels 3: in other words, to penetrate it on the front of a base or bottom panel 3a of the stack 2 to be selected. According to this invention, the claw 26 is associated with the retraction element 23 interchangeably so that it can be changed or replaced according to the type of material being worked or when worn.

As shown in Figure 1, the guide 24 is substantially horizontal, that is, parallel to the axis Y when the arm 17 is in the horizontal position.

The retraction element 23 moves between a withdrawn position, illustrated for example in Figure 1, and an advanced position, illustrated in Figure 2.

It is important to notice that the element 23 also has a lowered position and a raised position. These positions refer, preferably, to the retraction element 23 when it is in the advanced position and depend on the position of the arm 17.

Figure 2 shows the retraction element 23 in the lowered, advanced position, hereinafter referred to, for convenience, simply as lowered position, when the arm 17 is horizontal, while Figure 5 shows the retraction element 23 in the raised, advanced position, hereinafter referred to as raised position, corresponding to the rotated position of the arm 17.

An actuator 27 operates on the retraction element 23 to move it between the withdrawn and advanced positions.

The actuator 27 is mounted on the arm 17, moves with the latter and is preferably positioned between the walls 19 and 20.

Advantageously, the thrust of the actuator 27 can be adjusted according, in particular, to the characteristics of the panels 3 being worked.

With reference to Figure 1, starting from a first working configuration, the measuring means 8 determine the height of the stack 2 in substantially known manner.

Acting in conjunction with these, the platform, not illustrated, positions the pile 4 in such a way that the base or bottom panel 3a of the stack 2 is substantially horizontally aligned with the claw 26 and with the separator element 10, not shown in Figure 1.

It should be noticed that the claw 26 and the separator element 10 in their respective lowered withdrawn and home positions lie are substantially co-planar, that is to say, they lie in the same XY plane.

As may be inferred from Figure 2, the retraction element 23, under the action of the actuator 27, moves in the direction V to the advanced position where it engages the pile 4 at a point substantially under the base or bottom panel 3a of the stack 2 to be selected.

Thanks to the suitable positioning of the pile 4 relative to the retraction element 23, the tapered portion 26a enables the claw 26 to be inserted, preferably under the panel 3a, whose underside 3b, as described below, will therefore be subjected to a pushing action by the claw 26 itself.

Since the dimensions of the claw 26 are extremely limited (especially in thickness), the claw's action does not damage the panel 3a or the panel under that. It should also be noticed that, again on account of the limited penetration into the pile 4, any splintered edges are eliminated during subsequent trimming of the panels.

Thanks to the limited transversal dimensions of the claw 26, that is to say, the dimensions measured along the axis X, the claw's action is effective without damaging the panels 3, even if the panels in the pile have irregular surfaces or are misshapen.

As illustrated in Figure 5, the arm 17 is turned in a clockwise direction V1 from the configuration of Figure 2 under the downward vertical pushing action of the actuator 21.

This rotation moves the retraction element 23 to the raised position and the claw 26, acting on the underside of the panel 3a, lifts the stack 2 from the pile 4 and creates the space 16.

The wedge 10 is then advanced in the direction V by the respective actuator 14 and positioned in the space 16.

Next, the arm 17 is turned anticlockwise, the stack 2 is rested at least on the wedge 10, the retraction element 23 withdraws and, in substantially known manner, the stack 2 thus formed is made ready to be fed to other user stations downstream.

Advantageously, in the preferred embodiment illustrated, the apparatus 1 is mobile along the axis Y towards and away from the user stations.

Preferably, the apparatus 1 is installed on a pusher assembly, not illustrated since it is of substantially known type, normally used in panel saw machines to feed the panels to the cutting units.

The invention, as described above, has important advantages.

The selection means eliminate the risk of damage due to the penetration of the separator wedge in the pile of panels. Splintering, if any, caused by the claw is limited in extent and can therefore be removed easily during the trimming operations forming a normal part of panel processing.

The claw enables the panel required to be selected exactly, ensuring that the stack is formed with an extremely high degree of precision.

It will be understood that the invention can be modified and adapted in several ways without thereby departing from the scope of the invention as described in the appended claims.

## Claims

1. An apparatus for forming stacks of panels from a vertical pile (4) of panels (3), said apparatus comprising:
- measuring means (8) for setting the height of a stack (2) of the panels (3);
- selection means (9) for separating from the pile (4) a predetermined number of the panels (3) corresponding to the stack (2); said selection means (9) comprising at least one separator element (10) that moves in the feed direction (Y) of the stack (2) of panels (3) between a home position and working position to at least partly separate the stack (2) of panels from the pile (4), the selection means (9) comprising retraction means (15) in the form of a claw (26), smaller in depth (P26), measured along the feed direction (Y), than the separator element (10) and operating on at least one front of a base or bottom panel (3a) to be selected in such a way as to create a space (16) in the pile (4) to receive the separator element (10), **said retraction means (15) being at least partly mobile in a** longitudinal direction (Y) between a withdrawn position and an advanced position in which they engage the pile (4) and being mobile between a lowered position and a raised position for creating the space (16), the apparatus being **characterized in that** said retraction means (15) are rotatable about an axis of rotation (R) transversal to the longitudinal direction (Y) so as to move between the lowered and raised positions.

2. The apparatus according to claim 4 1, **characterized in that** the retraction means (15) comprise an arm (17) having a pivot (18) at the axis of rotation (R), the apparatus comprising means (21) for moving the retraction means and operating on the arm (17) in such a way as to turn it about the pivot (18).

3. The apparatus according to claim 1 or 2, **characterized in that** the claw (26) operates on the front and on the underside (3b) of the base panel (3a) in such a way as to create the space (16); the claw (26) being mobile between the withdrawn position and the advanced position.

4. The apparatus according to claims 2 and 3, **characterized in that** it comprises actuating means (27) for moving the claw (26) between the withdrawn and advanced positions, said actuating means (27) being adjustable to change the thrust they apply to the claw (26).

5. The apparatus according to claim 4, **characterized in that** the actuating means (27) are mounted on the arm (17).

6. The apparatus according to any of the claims from 2 to 5, **characterized in that** the measuring means (8) are mounted on the arm (17) and are mobile with the latter.

7. The apparatus according to any of the foregoing claims from 2 to 6, **characterized in that** the retraction means (15) comprise a retraction element (23) on which the claw (26) is mounted, said claw (26) being mounted on the retraction element (23) interchangeably.

## Patentansprüche

1. Vorrichtung zum Bilden von Plattenstapeln aus einem vertikalen Stoß (4) von Platten (3), wobei die Vorrichtung Folgendes umfasst:
- Messmittel (8) zum Einstellen der Höhe eines Stapels (2) der Platten (3);
- Auswahlmittel (9) zum Trennen einer festgelegten Anzahl der Platten (3), die dem Stapel (2) entspricht, vom Stoß (4), wobei die Auswahlmittel (9) mindestens ein Trennelement (10) umfassen, das sich in der Vorschubrichtung (Y) des Stapels (2) von Platten (3) zwischen einer Ausgangsposition und einer Arbeitsstellung bewegt, um zumindest teilweise den Stapel (2) von Platten vom Stoß (4) zu trennen, wobei die Auswahlmittel (9) Einziehmittel (15) in Form einer Kralle (26) umfassen, die entlang der Vorschubrichtung (Y) gemessen eine geringere Tiefe (P26) als das Trennelement (10) aufweist und derart auf mindestens eine auszuwählende Vorderseite einer Basis- bzw. unteren Platte (3a) einwirkt, dass ein Raum (16) im Stoß (4) zur Aufnahme des Trennelements (10) geschaffen wird, wobei die Einziehmittel (15) zumindest teilweise in einer Längsrichtung (Y) zwischen einer zurückgezogenen Stellung und einer vorgerückten Stellung beweglich sind, in der sie in den Stoß (4) eingreifen und wobei sie zwischen einer herabgesenkten Stellung und einer erhobenen Stellung zur Bildung des Raums (16) beweglich sind, wobei die Vorrichtung **dadurch gekennzeichnet ist, dass** die Einziehmittel (15) um eine Rotationsachse (R) transversal zur Längsrichtung (Y) rotierbar ist, sodass sie sich zwischen der herabgesenkten und der erhobenen Stellung bewegt.

2. Vorrichtung nach Anspruch 1, **dadurch gekennzeichnet, dass** die Einziehmittel (15) einen Arm (17) umfassen, der an der Rotationsachse (R) einen Zapfen (18) aufweist, wobei die Vorrichtung Mittel (21) zum Bewegen der Einziehmittel umfasst, die derart auf den Arm (17) einwirken, dass er um den Zapfen (18) gedreht wird.

3. Vorrichtung nach Anspruch 1 oder 2, **dadurch gekennzeichnet, dass** die Kralle (26) derart auf die Vorderseite und die Unterseite (3b) der Basisplatte (3a) einwirkt, dass der Raum (16) geschaffen wird, wobei die Kralle (26) zwischen der zurückgezogenen Stellung und der vorgerückten Stellung beweglich ist.

4. Vorrichtung nach den Ansprüchen 2 und 3, **dadurch gekennzeichnet, dass** sie Antriebsmittel (27) zum Bewegen der Kralle (26) zwischen der zurückgezogenen und der vorgerückten Stellung umfasst, wobei die Antriebsmittel (27) zur Änderung des Schubes regelbar sind, den sie auf die Kralle (26) ausüben.

5. Vorrichtung nach Anspruch 4, **dadurch gekennzeichnet, dass** die Antriebsmittel (27) am Arm (17) befestigt sind.

6. Vorrichtung nach einem der Ansprüche 2 bis 5, **dadurch gekennzeichnet, dass** die Messmittel (8) am Arm (17) befestigt sind und mit diesem beweglich sind.

7. Vorrichtung nach einem der vorangehenden Ansprüche 2 bis 6, **dadurch gekennzeichnet, dass** die Einziehmittel (15) ein Einziehelement (23) umfassen, an dem die Kralle (26) befestigt ist, wobei die Kralle (26) am Einziehelement (23) austauschbar befestigt ist.

## Revendications

1. Appareil pour former des piles de panneaux depuis un tas vertical (4) de panneaux (3), ledit appareil comprenant :
- des moyens de mesure (8) pour définir la hauteur d'une pile (2) des panneaux (3) ;
- des moyens de sélection (9) pour séparer du tas (4) un nombre prédéterminé de panneaux (3) correspondant à la pile (2) ; lesdits moyens de sélection (9) comprenant au moins un élément séparateur (10) qui se déplace dans la direction d'acheminement (Y) de la pile (2) de panneaux (3), entre une position initiale et une position de travail pour séparer, au moins partiellement, la pile (2) de panneaux du tas (4), les moyens de sélection (9) comprenant des moyens d'escamotage (15) sous la forme d'une griffe (26), de plus petite profondeur (P26), mesurée le long de la direction d'acheminement (Y), que l'élément séparateur (10) et agissant au moins sur une face avant d'un panneau de base ou inférieur (3a) à sélectionner, de sorte à former un espace (16) dans le tas (4) pour recevoir l'élément séparateur (10), lesdits moyens d'escamotage (15) se déplaçant au moins partiellement dans une direction longitudinale (Y) entre une position de retrait et une position d'avance, dans laquelle ils engagent le tas (4) et se déplaçant entre une position basse et une position haute pour former l'espace (16), l'appareil **se caractérisant en ce que** lesdits moyens d'escamotage (15) peuvent tourner autour d'un axe de rotation (R) transversal à la direction longitudinale (Y), afin de se déplacer entre la position basse et la position haute.

2. Appareil selon la revendication 1, **caractérisé en ce que** les moyens d'escamotage (15) comprennent un bras (17) avec un pivot (18) sur l'axe de rotation (R), l'appareil comprenant des moyens (21) pour déplacer les moyens d'escamotage et agissant sur le bras (17) pour le faire tourner autour du pivot (18).

3. Appareil selon les revendications 1 ou 2, **caractérisé en ce que** la griffe (26) agit sur la face avant et sur la face inférieure (3b) du panneau de base (3a) pour former l'espace (16) ; la griffe (26) se déplaçant entre la position de retrait et la position d'avance.

4. Appareil selon les revendications 2 et 3, **caractérisé en ce qu'**il comprend des moyens d'actionnement (27) pour déplacer la griffe (26) entre la position de retrait et la position d'avance, lesdits moyens d'actionnement (27) étant réglables pour modifier la poussée qu'ils exercent sur la griffe (26).

5. Appareil selon la revendication 4, **caractérisé en ce que** les moyens d'actionnement (27) sont montés sur le bras (17).

6. Appareil selon l'une quelconque des revendications 2 à 5, **caractérisé en ce que** les moyens de mesure (8) sont montés sur le bras (17) et se déplacent avec celui-ci.

7. Appareil selon l'une quelconque des revendications précédentes 2 à 6, **caractérisé en ce que** les moyens d'escamotage (15) comprennent un élément d'escamotage (23), sur lequel est montée la griffe (26), ladite griffe (26) étant montée sur l'élément d'escamotage (23) de manière interchangeable.
